(19) Europäisches Patentamt
European Patent Office
Office européen des brevets

(11) **EP 3 622 181 B1**

(12) **EUROPÄISCHE PATENTSCHRIFT**

(45) Veröffentlichungstag und Bekanntmachung des Hinweises auf die Patenterteilung:
**05.08.2020   Patentblatt 2020/32**

(21) Anmeldenummer: **18773431.4**

(22) Anmeldetag: **20.09.2018**

(51) Int Cl.:
*F04D 27/00* (2006.01)          *F04D 17/16* (2006.01)
*F04D 29/42* (2006.01)          *F04D 25/08* (2006.01)
*G01F 1/34* (2006.01)

(86) Internationale Anmeldenummer:
**PCT/EP2018/075416**

(87) Internationale Veröffentlichungsnummer:
**WO 2019/063395 (04.04.2019 Gazette 2019/14)**

(54) **RADIALVENTILATOR MIT DIFFERENZDRUCKMESSUNG**

RADIAL VENTILATOR WITH DIFFERENTIAL PRESSURE MEASUREMENT

VENTILATEUR RADIAL DOTÉ D'UNE MESURE DE PRESSION DIFFÉRENTIELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2017   DE 102017122238**

(43) Veröffentlichungstag der Anmeldung:
**18.03.2020   Patentblatt 2020/12**

(73) Patentinhaber: **EBM-Papst Mulfingen GmbH&CO. KG**
**74673 Mulfingen (DE)**

(72) Erfinder:
• **MÜLLER, Jens**
  **74653 Künzelsau (DE)**
• **GEBERT, Daniel**
  **74613 Öhringen (DE)**
• **RIEGLER, Peter**
  **97944 Boxberg (DE)**
• **DÖRR, Johannes**
  **74673 Mulfingen (DE)**

(74) Vertreter: **Staeger & Sperling**
**Partnerschaftsgesellschaft mbB**
**Sonnenstraße 19**
**80331 München (DE)**

(56) Entgegenhaltungen:
**EP-A1- 1 528 260          EP-A2- 1 865 205**
**CN-U- 206 352 594      DE-A1-102004 038 523**
**US-A- 1 897 858          US-A1- 2017 030 378**

EP 3 622 181 B1

**Beschreibung**

Die Erfindung betrifft einen Radialventilator mit Differenzdruckmessung zur Bestimmung des Volumenstroms.

Aus dem Stand der Technik sind bereits verschiedene Ausführungsformen von Ventilatoren bekannt, welche den Volumenstrom des Ventilators durch eine Anpassung der Ventilatorraddrehzahl anhand von gemessenen Luftdrücken regeln. Die Ventilatoren umfassen hierzu jeweils ein von einem Motor angetriebenes Ventilatorrad, dessen Drehzahl über die Motordrehzahl gesteuert wird.

Ferner sind aus dem Stand der Technik Druckmessungen für Radialventilatoren bekannt, siehe z.B. CN206352594U, US1897858A und EP1865205A2.

Trommelläufer-Ventilatoren werden dabei aufgrund von erhöhten Effizienzanforderungen mehr und mehr durch Radialventilatoren mit gekrümmten Schaufeln ersetzt, bei denen jedoch im Gegensatz zu Trommelläufer-Ventilatoren kein eindeutiger Zusammenhang zwischen der Leistungsaufnahme und dem gefördertem Volumenstrom bei konstanter Ventilatorraddrehzahl besteht. Deshalb sind Verfahren zur Volumenstrommessung und Volumenstromregelung entwickelt worden, bei denen der statische Luftdruck im Einströmraum in einer Ringleitung gemessen und aus den gemessenen Werten der Volumenstrom errechnet wird. Typischerweise werden mehrere Druckentnahmestutzen über eine Ringleitung verbunden und mittels einer Schlauchleitung ein Drucksensor angeschlossen. Dabei ist nachteilig, dass die Montage der Ringleitung und der Schlauchleitung aufwendig und mithin kostenintensiv ist. Ferner besteht zwischen dem geförderten Volumenstrom und dem statischen Wirkdruck ein quadratischer Zusammenhang, der bei kleinen Volumenströmen zu einem kaum messbaren Drucksignal und somit zu einer sehr schlechten Messgenauigkeit führt.

Der Erfindung liegt deshalb die Aufgabe zugrunde, einen Radialventilator mit integrierter Volumenstrommessung bereit zu stellen, die kostengünstig ist und auch bei geringen geförderten Volumenströmen eine ausreichend gute Messgenauigkeit des Differenzdrucks zur Bestimmung des Volumenstroms gewährleistet.

Diese Aufgabe wird durch die Merkmalskombination gemäß Patentanspruch 1 gelöst.

Erfindungsgemäß wird hierfür ein Radialventilator mit einem Ventilatorrad, einem das Ventilatorrad antreibenden Motor und einem Ventilatorgehäuse vorgeschlagen, wobei der Radialventilator eine in Strömungsrichtung gesehen ansaugseitige Saugseite und eine axial gegenüberliegende Druckseite hat. Das Ventilatorgehäuse ist aus einem saugseitigen Vorderteil und einem druckseitigen Hinterteil gebildet, zwischen denen, in Axialrichtung gesehen, das Ventilatorrad angeordnet ist. Das Vorderteil und das Hinterteil sind mit zumindest einer Axialstrebe verbunden, die einen durchgängigen sowie zur Saugseite und zur Druckseite offenen Hohlkanal aufweist. In dem Hohlkanal ist mindestens ein Differenzdrucksensor angeordnet, der im Betrieb des Radialventilators unmittelbar einen Druckunterschied des jeweiligen statischen Luftdrucks auf der Saugseite und der Druckseite des Radialventilators erfasst bzw. misst.

Durch die Integration des Differenzdrucksensors in die Axialstrebe wird die bisherige Verwendung einer Ringleitung sowie von Druckschläuchen und Druckstutzen überwunden. Die Axialstrebe wird zur Integration des Differenzdrucksensors mit dem sich in axialer Richtung von der Saugseite zur Druckseite hindurch erstreckenden Hohlkanal gebildet und der Differenzdrucksensor darin angeordnet. Der Hohlkanal steht bezüglich des jeweiligen statischen Luftdrucks unmittelbar in Wirkverbindung mit der Saugseite und der Druckseite des Radialventilators, so dass über den Differenzdrucksensor der Druckunterschied feststellbar und daraus der aktuelle Volumenstrom des Radialventilators berechenbar ist. Die erfindungsgemäße Lösung bietet eine kostengünstige Möglichkeit zur Feststellung des Volumenstroms auch bei geringen Druckunterschieden. Zudem ist der Differenzdrucksensor in der Axialstrebe vor Fremdeinflüssen geschützt.

Als weiterer Vorteil der erfindungsgemäßen Anordnung des Differenzdrucksensors im Hohlkanal der Axialstrebe ist anzuerkennen, dass die Hauptströmung nicht beeinflusst wird und keine negativen Auswirkungen auf die Effizienz und das geräuschverhalten des Radialventilators zu verzeichnen sind. Bei einer Verwendung von Differenzdrucksensoren jeweils in mehreren Axialstreben kann die Messgenauigkeit weiter erhöht werden.

In einer vorteilhaften Ausführungsvariante des Radialventilators ist der Differenzdrucksensor als Heißfilmsensor ausgebildet. Durch den Druckunterschied auf der Saugseite und der Druckseite während des Betriebs des Radialventilators erfolgt eine Luftströmung durch den Hohlkanal der Axialstrebe und mithin über den Heißfilmsensor. Die Luftströmung beeinflusst die Temperatur am Heißfilmsensor abhängig von dem Druckunterschied auf der Saugseite und der Druckseite, so dass über die Temperaturbeeinflussung am Heißfilmsensor der Druckunterschied messbar ist.

Günstig ist eine Ausführung des Heißfilmsensors mit zwei in einer axialen Reihe angeordneten Sensorelementen, die zur Verbesserung der Messgenauigkeit axial gesehen nacheinander positioniert und von der Luftströmung durch den Hohlkanal nacheinander überströmt werden. Dabei werden die Sensorelemente in einer vorteilhaften Ausführung als Thermoelemente, vorzugsweise als Widerstandsthermometer als ein PT100-Thermoelement und ein PT1000-Thermoelement ausgebildet und das PT100-Thermoelement in Strömungsrichtung im Hohlkanal vor dem PT1000-Thermoelement angeordnet.

Der Heißfilmsensor liefert als Messsignal eine Sensorspannung, aus der durch ein Polynom der Differenzdruck berechenbar ist. Vorzugsweise werden die Eingangsgröße (Sensorspannung Usensor) und die Ausgangsgröße (Differenzdruck psf) zur Übertragbarkeit auf beliebige Baugrößen des Radialventilators mit der minimalen und maximalen Sensorspannung (Usensor_min, Usensor_max) durch die Formel normiert:

$$U=((Usensor)-(Usensor\_min)) \,/\, ((Usensor\_max)-(Usensor\_min))$$

Die minimale Sensorspannung Usensor_min wird erreicht, wenn der Radialventilator freiblasend auf seiner Lüfterkennlinie betrieben wird. Die maximale Sensorspannung Usensor_max wird bei maximalem Druck der jeweiligen Lüfterkennlinie des Radialventilators erreicht.

Die Ausgangsgröße des Differenzdrucks psf wird nur mit dem maximalen Druck psf_max des jeweiligen Radialventilators normiert, so dass gilt:

$$P=(psf/psf\_max).$$

Bei einem beispielhaften Durchmesser des Hohlkanals in der Axialstrebe von 3mm ergibt sich folgendes Polynom:

$$P = a * (U^5 - 2,05\,(U^4 - 0,756 * U^3 + 0,18 * U^2 - 0,029U + b))$$

mit 4,6 ≤ a ≤ 5,8, vorzugsweise 4,9 ≤ a ≤ 5,5 und
-0,004 ≤ b ≤ 0,004, vorzugsweise -0,002 ≤ b ≤ 0,002, wobei das Polynom durch den festgelegten Wertebereich auf weitere Durchmesser des Hohlkanals übertragbar ist.

Zur Berechnung des Volumenstroms weist der Radialventilator vorteilhafterweise eine Auswerteelektronik auf. Diese bestimmt aus den durch den Differenzdrucksensor erfassten Werten des jeweiligen statischen Luftdrucks und der Ventilatorraddrehzahl den Volumenstrom des Radialventilators. Die Auswerteelektronik kann dabei in die Motorsteuerung integriert sein.

In einer Weiterbildung des Radialventilators ist vorgesehen, dass die Axialstrebe bzw. die Axialstreben teilweise an dem Vorderteil und teilweise an dem Hinterteil jeweils einstückig ausgebildet ist bzw. sind. Das Ventilatorgehäuse ist somit zweiteilig und kann von zwei axialen Seiten montiert werden.

Ferner ist der Radialventilator in einer günstigen Ausführung als einteiliges Radialmodul ausgebildet. Ein Radialmodul ist dadurch gekennzeichnet, dass es als einziges Bauteil an den bestimmungsgemäßen Einsatzort positionierbar und anschließbar ist, ohne dass weitere Bauteile ergänzt oder montiert werden müssten. Auch kann das Radialmodul im Störfall als Ganzes getauscht werden.

Das Vorderteil und das Hinterteil des Ventilatorgehäuses sind in einem Ausführungsbeispiel axial unmittelbar an das Ventilatorrad angrenzend angeordnet, so dass ein kompakter Aufbau des Radialventilators gewährleistet ist. Dabei ist eine günstige Variante des Radialventilators dadurch gekennzeichnet, dass das Vorderteil und das Hinterteil als das Ventilatorrad axialseitig überdeckende Platten ausgebildet sind. Das Vorderteil weist jedoch eine zentrale Einlassöffnung auf. Die Axialstreben verbinden die Platten unmittelbar miteinander.

Ferner ist eine Ausführung des Radialventilators günstig, bei der in dem Vorderteil des Ventilatorgehäuses eine sich in axialer Richtung zu einer Ansaugöffnung des Ventilatorrades erstreckende Einlaufdüse ausgebildet ist. Die Einlaufdüse leitet über ihren Axialerstreckungsabschnitt die angesaugte Luftströmung unmittelbar in die Ansaugöffnung des Ventilatorrades.

Die eine oder Vielzahl der Axialstreben ist in einer Ausführungsvariante an einem sich in radialer Richtung an das Ventilatorrad anschließenden Umfangsrandabschnitt des Vorderteils und Hinterteils angeordnet.

Ferner ist eine Ausführung des Radialventilators vorteilhaft, bei welcher der Hohlkanal durch das Vorderteil und das Hinterteil des Ventilatorgehäuses verlängert ist. Beispielsweise können das Vorderteil und Hinterteil hierfür entsprechende Öffnungen, insbesondere mit einer dem Hohlkanal entsprechenden Querschnittsform aufweisen. Der Hohlkanal erstreckt sich dann in Strömungsrichtung gesehen axial durch das Vorderteil, die Axialstrebe(n) und das Hinterteil von der Saugseite zur Druckseite.

Die Erfindung umfasst ferner ein Verfahren zur Volumenstrommessung der vorstehend beschriebenen Radialventilators, wobei durch den Differenzdrucksensor in dem Hohlkanal der Druckunterschied des jeweiligen statischen Luftdrucks auf der Saugseite und der Druckseite des Radialventilators unmittelbar gemessen und eine Ventilatorraddrehzahl erfasst werden. Aus den Werten des Druckunterschieds und der Ventilatorraddrehzahl wird der durch den Radialventilator geförderte Volumenstrom durch die Auswerteelektronik berechnet. Dabei sind alle offenbarten Varianten des Radialventilators einsetzbar.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1    eine perspektivische, teilweise geschnittene Ansicht eines Radialventilators;

Fig. 2    eine seitliche Schnittansicht eines Radialventilators in einer weiteren Ausführung;

Fig. 3    ein Diagramm zur Darstellung des Druckverlaufs und der Drehzahl bei unterschiedlichen Volumenströmen;

Fig. 4    ein Diagramm des normierten Druckunterschieds gegenüber normierten Sensorspannung.

Gleiche Bezugszeichen benennen gleiche Teile in allen Ansichten.

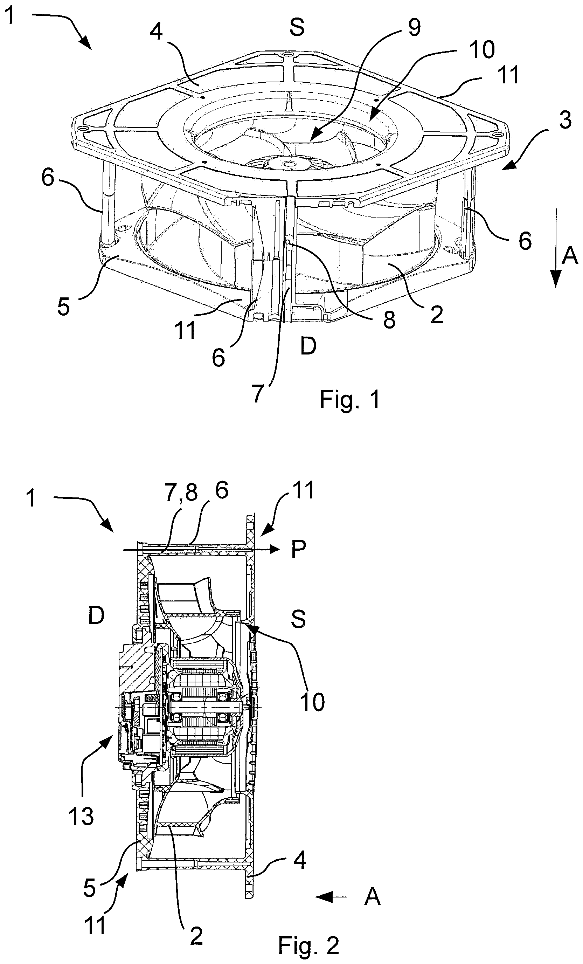

In Figur 1 ist ein Ausführungsbeispiel eines Radialventilators 1 ausgebildet als Radialmodul in einer perspektivischen, teilweise geschnittenen Ansicht gezeigt. Der Radialventilator 1 umfasst ein Ventilatorrad 2, einen rückseitig angeordneten, nicht zu erkennenden Motor und ein Ventilatorgehäuse 3. Im Betrieb saugt der Radialventilator 1 Luft in Axialrichtung A von der Saugseite S an und bläst sie radial aus. Die der Saugseite S axial gegenüberliegende Seite des Radialventilators 1 ist die Druckseite D. Das Ventilatorrad 2 umfasst eine Vielzahl von in einem Schaufelkranz angeordneten rückwärtsgekrümmten Schaufeln, die axial beidseitig von einer Bodenscheibe und einer Deckscheibe überdeckt sind. Die Deckscheibe bildet die Ansaugöffnung 9 des Ventilatorrades 2.

Das Ventilatorgehäuse 3 umfasst ein plattenartig ausgebildetes, saugseitiges Vorderteil 4 und ein plattenartig ausgebildetes, druckseitiges Hinterteil 5, zwischen denen das Ventilatorrad 2 unmittelbar angrenzend angeordnet ist. Das Vorderteil 4 und das Hinterteil 5 sind im Wesentlichen quadratisch und über vier jeweils in radialen Umfangsrandabschnitten 11 ausgebildeten Axialstreben 6 verbunden, die jeweils zum Teil an dem Vorderteil 4, zum Teil an dem Hinterteil 5 ausgebildet sind und das Ventilatorrad 2 radial außenseitig einschließen. In dem Vorderteil 4 des Ventilatorgehäuses 3 ist die sich in axialer Richtung A zu der Ansaugöffnung 9 des Ventilatorrades 3 erstreckende Einlaufdüse 10 ausgebildet.

Zur besseren Erkennbarkeit ist die in Figur 1 nach Vorne zugewandte Axialstrebe 6 geschnitten, so dass der in der Axialstrebe 6 zwischen dem Vorderteil 4 und dem Hinterteil 5 verlaufende Hohlkanal 7 zu erkennen ist. Sowohl das Vorderteil 4 als auch das Hinterteil 5 weisen Öffnungen auf, welche den Hohlkanal 7 jeweils nach axial außen verlängern und den Hohlkanal 7 unmittelbar mit der Saugseite S und der Druckseite D offen verbinden. Der Hohlkanal 7 weist einen im Wesentlichen runden Querschnitt auf. In dem Hohlkanal 7 ist der als Heißfilmsensor ausgebildete Differenzdrucksensor 8 angeordnet und mithin in die Axialstrebe 6 integriert. Der Heißfilmsensor umfasst dabei in dem Ausführungsbeispiel ein PT100-Thermoelement und ein axial in Reihe hierzu angeordnetes PT1000-Thermoelement, wie vorstehend beschrieben.

Figur 2 zeigt einen Radialventilator 1 in einer Schnittansicht, der im Wesentlichen dieselben Merkmale der Ausführung gemäß Figur 1 aufweist, bei dem jedoch die Wirkung der Luftströmung eingezeichnet und der Motor zu erkennen ist. Durch den im Betrieb des Radialventilators 1 erzeugten Druckunterschied auf der Saugseite S und der Druckseite D wird die Luftströmung P durch den Hohlkanal 7 der Axialstrebe 6 in Richtung der Saugseite S erzeugt. Die Luftströmung P strömt in Axialrichtung nacheinander über die beiden in Reihe angeordneten Thermoelemente des Heißfilmsensors, der aus der Temperaturveränderung den Druckunterschied des jeweiligen statischen Luftdrucks auf der Saugseite S und der Druckseite D des Radialventilators 1 erfasst und als Signal an die Auswertelektronik 13 zur Berechnung des Volumenstroms übermittelt.

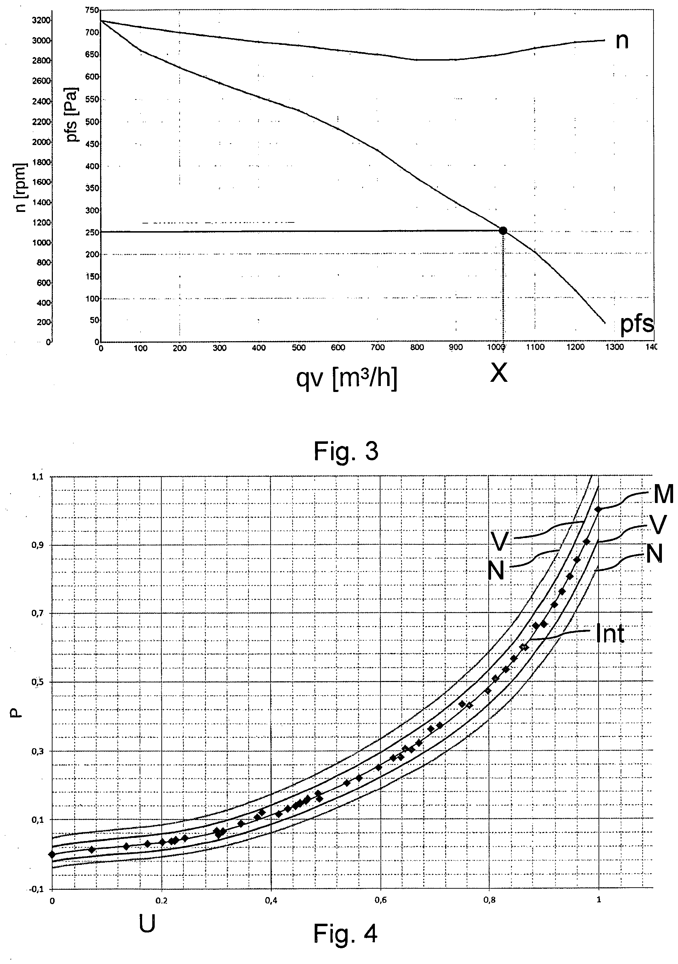

In Figur 3 ist ein Diagramm zur Darstellung des Druckverlaufs pfs und der Ventilatorraddrehzahl n bei unterschiedlichen Volumenströmen qv des Radialventilators 1 aus Figur 1 gezeigt. Beispielhaft ist ein Betriebswert herausgegriffen, bei dem aus der durch den Differenzdrucksensor 8 erfassten Druckdifferenz und der entsprechenden Ventilatorraddrehzahl n über die Auswerteelektronik ein Volumenstrom X von knapp über 1000m$^3$/h berechnet wird.

Figur 4 zeigt den Anstieg des normierten Druckunterschieds P gegenüber der normierten Sensorspannung U im Wertebereich von 0 bis 1 anhand von Kennlinien. Die Ausgangsgröße des Differenzdrucks wird nur mit dem maximalen Druck des Radialventilators 1 normiert. Die im Diagramm eingezeichneten Messwerte M sind diejenigen des Radialventilators 1 aus Figur 1. Zudem sind eine interpolierten Kennlinie Int der Messwerte M sowie die Kennlinien des normalen Bereichs N und des Vorzugsbereichs V eingezeichnet. Die Messwerte repräsentieren den über das Polynom

$$P = a * (U^5 - 2,05\,(U^4 - 0,756 * U^3 + 0,18 * U^2 - 0,029U + b))$$

berechneten Druckunterschied bei einem Durchmesser des Hohlkanals in der Axialstrebe von 3mm. Die Kennlinien M, V bestimmen jeweils einen Korridor für normale und bevorzugte Messwerte M.

**Patentansprüche**

1. Radialventilator (1) mit einem Ventilatorrad (2), einem das Ventilatorrad antreibenden Motor und einem Ventilatorgehäuse (3), wobei der Radialventilator (1) eine in Strömungsrichtung ansaugseitig liegende Saugseite (S) und eine axial gegenüberliegende Druckseite (D) aufweist, wobei das Ventilatorgehäuse (3) aus einem saugseitigen Vorderteil (4) und einem druckseitigen Hinterteil (5) gebildet ist, zwischen denen, in Axialrichtung gesehen, das Ventilatorrad (2) angeordnet ist, und wobei das Vorderteil (4) und das Hinterteil (5) mit zumindest einer Axialstrebe (6) verbunden sind, **dadurch gekennzeichnet, dass** die Axialstrebe einen durchgängigen, zur Saugseite (S) und zur Druckseite (D) offenen Hohlkanal (7) aufweist, in dem mindestens ein Differenzdrucksensor (8) angeordnet ist, der im Betrieb des Radialventilators (1) unmittelbar einen Druckunterschied des jeweiligen statischen Luftdrucks auf der Saugseite (S) und der Druckseite (D) des Radialventilators (1) erfasst.

2. Radialventilator nach Anspruch 1, **dadurch gekennzeichnet, dass** der Differenzdrucksensor (8) als Heißfilmsensor ausgebildet ist.

3. Radialventilator nach Anspruch 1 oder 2, **dadurch gekennzeichnet, dass** er eine Auswerteelektronik (13) aufweist, welche aus den durch den Differenzdrucksensor (8) erfassten Werten des jeweiligen statischen Luftdrucks und einer Ventilatorraddrehzahl einen Volumenstrom des Radialventilators (1) bestimmt.

4. Radialventilator nach einem der vorigen Ansprüche, **dadurch gekennzeichnet, dass** die zumindest eine Axialstrebe (6) teilweise an dem Vorderteil (4) und teilweise an dem Hinterteil (5) jeweils einstückig ausgebildet ist.

5. Radialventilator nach einem der vorigen Ansprüche, **dadurch gekennzeichnet, dass** er als einteiliges Radialmodul ausgebildet ist.

6. Radialventilator nach einem der vorigen Ansprüche, **dadurch gekennzeichnet, dass** das Vorderteil (4) und das Hinterteil (5) axial unmittelbar an das Ventilatorrad (2) angrenzend angeordnet sind.

7. Radialventilator nach einem der vorigen Ansprüche, **dadurch gekennzeichnet, dass** das Vorderteil (4) und das Hinterteil (5) als das Ventilatorrad (2) axialseitig überdeckende Platten ausgebildet sind, wobei das Vorderteil (4) eine zentrale Einlassöffnung aufweist.

8. Radialventilator nach einem der vorigen Ansprüche, **dadurch gekennzeichnet, dass** in dem Vorderteil (4) des Ventilatorgehäuses (3) eine sich in axialer Richtung zu einer Ansaugöffnung (9) des Ventilatorrades (3) erstreckende Einlaufdüse (10) ausgebildet ist.

9. Radialventilator nach einem der vorigen Ansprüche, **dadurch gekennzeichnet, dass** die Axialstreben (6) an einem sich in radialer Richtung an das Ventilatorrad (2) anschließenden Umfangsrandabschnitt (11) des Vorderteils (4) und Hinterteils (5) angeordnet sind.

10. Radialventilator nach einem der vorigen Ansprüche, **dadurch gekennzeichnet, dass** der Hohlkanal (7) durch das Vorderteil (4) und das Hinterteil (5) des Ventilatorgehäuses (3) verlängert ist.

11. Radialventilator nach zumindest Anspruch 2, **dadurch gekennzeichnet, dass** der Heißfilmsensor zwei in einer axialen Reihe angeordnete Sensorelemente aufweist.

12. Radialventilator nach dem vorigen Anspruch, **dadurch gekennzeichnet, dass** die Sensorelemente als Thermoelemente, insbesondere als ein PT100-Thermoelement und ein PT1000-Thermoelement ausgebildet sind.

13. Radialventilator nach dem vorigen Anspruch, **dadurch gekennzeichnet, dass** das PT100-Thermoelement in Strömungsrichtung im Hohlkanal vor dem PT1000-Thermoelement angeordnet ist.

14. Verfahren zur Volumenstrommessung eines Radialventilators nach zumindest Anspruch 3, **dadurch gekennzeichnet, dass** durch den Differenzdrucksensor (8) in dem Hohlkanal (7) der Druckunterschied (psf) des jeweiligen statischen Luftdrucks auf der Saugseite (S) und der Druckseite (D) des Radialventilators (1) unmittelbar gemessen und eine Ventilatorraddrehzahl (n) erfasst werden, wobei aus den Werten des Druckunterschieds (psf) und der Ventilatorraddrehzahl (n) der durch den Radialventilator (1) geförderte Volumenstrom durch die Auswerteelektronik (13) berechnet wird.

**15.** Verfahren nach Anspruch 14, **dadurch gekennzeichnet, dass** der Differenzdrucksensor (8) als Messsignal eine Sensorspannung (Usensor) liefert, aus der durch ein Polynom (P) der Druckunterschieds (psf) berechnet wird, wobei das Polynom durch die Formel bestimmt ist:

$$P = a * (U^5 - 2{,}05\,(U^4 - 0{,}756 * U^3 + 0{,}18 * U^2 - 0{,}029U + b))$$

mit $4{,}6 \leq a \leq 5{,}8$, und $-0{,}004 \leq b \leq 0{,}004$,

Usensor_min ist die minimale Sensorspannung die erreicht wird, wenn der Radialventilator freiblasend auf seiner Lüfterkennlinie betrieben wird,

Usensor_max ist die maximale Sensorspannung die bei maximalem Druck der jeweiligen Lüfterkennlinie des Radialventilators erreicht wird, und

U=((Usensor)-(Usensor_min)) / ((Usensor_max)-(Usensor_min)).

## Claims

**1.** A radial ventilator (1) comprising a ventilator wheel (2), a motor which drives the ventilator wheel, and a ventilator housing (3), wherein the radial ventilator (1) has a suction side (S), which is on the intake side as viewed in the flow direction, and a pressure side (D), which lies axially opposite the suction side, wherein the ventilator housing (3) is made of a suction-side front part (4) and a pressure-side rear part (5), between which, as viewed in the axial direction, the ventilator wheel (2) is arranged, and wherein the front part (4) and the rear part (5) are connected by at least one axial brace (6),
**characterized in that** the axial brace has a continuous hollow channel (7) which is open towards the suction side (S) and the pressure side (D) and in which at least one differential pressure sensor (8) is arranged, said differential pressure sensor directly detecting a pressure difference of the respective static air pressure on the suction side (S) and the pressure side (D) of the radial ventilator (1) during operation of the radial ventilator (1).

**2.** The radial ventilator according to claim 1, **characterized in that** the differential pressure sensor (8) is configured as a hot film sensor.

**3.** The radial ventilator according to claim 1 or 2, **characterized in that** it has an electronic analysis unit (13), which determines a volumetric flow rate of the radial ventilator (1) from the respective static air pressure value and a ventilator speed value, which are detected by the differential pressure sensor (8).

**4.** The radial ventilator according to any one of the preceding claims, **characterized in that** the at least one axial brace (6) is formed partially on the front part (4) and partially on the rear part (5), in each case integrally therewith.

**5.** The radial ventilator according to any one of the preceding claims, **characterized in that** it is configured as a one-piece radial module.

**6.** The radial ventilator according to any one of the preceding claims, **characterized in that** the front part (4) and the rear part (5) are arranged directly adjoining the ventilator wheel (2) axially.

**7.** The radial ventilator according to any one of the preceding claims, **characterized in that** the front part (4) and the rear part (5) are configured as plates that cover the ventilator wheel (2) on the axial sides, with the front part (4) having a central inlet opening.

**8.** The radial ventilator according to any one of the preceding claims, **characterized in that**, in the front part (4) of the ventilator housing (3), an inlet nozzle (10) is formed, extending in the axial direction towards an intake opening (9) of the ventilator wheel (3).

**9.** The radial ventilator according to any one of the preceding claims, **characterized in that** the axial braces (6) are arranged on a circumferential edge section (11) of the front part (4) and a circumferential edge section of the rear part (5), each of which adjoins the ventilator wheel (2) in the radial direction.

10. The radial ventilator according to any one of the preceding claims, **characterized in that** the hollow channel (7) is extended through the front part (4) and the rear part (5) of the ventilator housing (3).

11. The radial ventilator according to at least claim 2, **characterized in that** the hot film sensor has two sensor elements arranged in an axial row.

12. The radial ventilator according to the preceding claim, **characterized in that** the sensor elements are configured as thermocouples, in particular as a PT100 thermocouple and a PT1000 thermocouple.

13. The radial ventilator according to the preceding claim, **characterized in that** the PT100 thermocouple is arranged in the hollow channel upstream of the PT1000 thermocouple in the direction of flow.

14. A method for measuring the volumetric flow rate of a radial ventilator according to at least claim 3, **characterized in that** the differential pressure sensor (8) measures the pressure difference (psf) in the respective static air pressure between the suction side (S) and the pressure side (D) of the radial ventilator (1) directly in the hollow channel (7) and detects a ventilator wheel speed (n), wherein the volumetric flow rate conveyed by the radial ventilator (1) is calculated by the electronic analysis unit (13) from the values for pressure difference (psf) and ventilator speed (n),

15. The method according to claim 14, **characterized in that** the differential pressure sensor (8) supplies a sensor voltage (Usensor) as a measurement signal, from which the pressure difference (psf) is calculated using a polynomial (P), wherein the polynomial is determined by the following formula:

$$P = a * (U^5 - 2,05\,(U^4 - 0,756 * U^3 + 0,18 * U^2 - 0,029U + b))$$

in which $4.6 \leq a \leq 5.8$ and $-0.004 \leq b \leq 0.004$,
Usensor_min is the minimum sensor voltage reached when the radial ventilator is in free-blowing operation on its characteristic fan curve,
Usensor_max is the maximum sensor voltage reached at maximum pressure on the respective characteristic fan curve of the radial ventilator, and

$$U = ((Usensor)-(Usensor\_min)) / ((Usensor\_max)-(Usensor\_min)).$$

## Revendications

1. Ventilateur radial (1) avec une roue de ventilateur (2), un moteur entraînant la roue de ventilateur et un boîtier de ventilateur (3), dans lequel le ventilateur radial (1) présente un côté aspiration (S) situé côté aspiration dans la direction d'écoulement et un côté pression (D) axialement opposé, dans lequel le boîtier de ventilateur (3) est formé d'une partie avant (4) côté aspiration et d'une partie arrière (5) côté pression, entre lesquelles, vu dans la direction axiale, la roue de ventilateur (2) est agencée, et
dans lequel la partie avant (4) et la partie arrière (5) sont reliées à au moins une entretoise axiale (6),
**caractérisé en ce que** l'entretoise axiale présente un canal creux (7) traversant, ouvert vers le côté aspiration (S) et vers le côté pression (D), dans lequel au moins un capteur de pression différentielle (8) est agencé, qui détecte lors du fonctionnement du ventilateur radial (1) directement une différence de pression de la pression d'air statique respective sur le côté aspiration (S) et le côté pression (D) du ventilateur radial (1).

2. Ventilateur radial selon la revendication 1, **caractérisé en ce que** le capteur de pression différentielle (8) est réalisé en tant que capteur à film chaud.

3. Ventilateur radial selon la revendication 1 ou 2, **caractérisé en ce qu'**il présente une électronique d'évaluation (13), laquelle détermine un débit volumique du ventilateur radial (1) à partir des valeurs détectées par le capteur de pression différentielle (8) de la pression d'air statique respective et d'une vitesse de rotation de roue de ventilateur.

4. Ventilateur radial selon l'une quelconque des revendications précédentes, **caractérisé en ce que** l'au moins une entretoise axiale (6) est réalisée respectivement d'un seul tenant en partie au niveau de la partie avant (4) et en partie au niveau de la partie arrière (5).

5. Ventilateur radial selon l'une quelconque des revendications précédentes, **caractérisé en ce qu'**il est réalisé en tant que module radial monobloc.

6. Ventilateur radial selon l'une quelconque des revendications précédentes, **caractérisé en ce que** la partie avant (4) et la partie arrière (5) sont agencées de manière adjacente axialement directement à la roue de ventilateur (2).

7. Ventilateur radial selon l'une quelconque des revendications précédentes, **caractérisé en ce que** la partie avant (4) et la partie arrière (5) sont réalisées en tant que plaques recouvrant côté axial la roue de ventilateur (2), dans lequel la partie avant (4) présente une ouverture d'entrée centrale.

8. Ventilateur radial selon l'une quelconque des revendications précédentes, **caractérisé en ce qu'**une buse d'entrée (10) s'étendant dans la direction axiale vers une ouverture d'aspiration (9) de la roue de ventilateur (3) est réalisée dans la partie avant (4) du boîtier de ventilateur (3).

9. Ventilateur radial selon l'une quelconque des revendications précédentes, **caractérisé en ce que** les entretoises axiales (6) sont agencées au niveau d'une section de bord circonférentiel (11) se raccordant dans la direction radiale à la roue de ventilateur (2) de la partie avant (4) et de la partie arrière (5).

10. Ventilateur radial selon l'une quelconque des revendications précédentes, **caractérisé en ce que** le canal creux (7) est prolongé par la partie avant (4) et la partie arrière (5) du boîtier de ventilateur (3).

11. Ventilateur radial selon au moins la revendication 2, **caractérisé en ce que** le capteur à film chaud présente deux éléments de capteur agencés dans une rangée axiale.

12. Ventilateur radial selon la revendication précédente, **caractérisé en ce que** les éléments de capteur sont réalisés en tant que thermocouples, en particulier en tant que thermocouple PT100 et thermocouple PT1000.

13. Ventilateur radial selon la revendication précédente, **caractérisé en ce que** le thermocouple PT100 est agencé dans la direction d'écoulement dans le canal creux avant le thermocouple PT1000.

14. Procédé de mesure de débit volumique d'un ventilateur radial selon au moins la revendication 3, **caractérisé en ce que** par le capteur de pression différentielle (8) dans le canal creux (7) la différence de pression (psf) de la pression d'air statique respective sur le côté aspiration (S) et le côté pression (D) du ventilateur radial (1) est mesurée directement et une vitesse de rotation de roue de ventilateur (n) est détectée, dans lequel le débit volumique transporté par le ventilateur radial (1) est calculé par l'électronique d'évaluation (13) à partir des valeurs de la différence de pression (psf) et de la vitesse de rotation de roue de ventilateur (n).

15. Procédé selon la revendication 14, **caractérisé en ce que** le capteur de pression différentielle (8) fournit en tant que signal de mesure une tension de capteur (Usensor), à partir de laquelle la différence de pression (psf) est calculée par un polynôme (P), dans lequel le polynôme est déterminé par la formule :

$$P = a * (U^5 - 2,05 \, (U^4 - 0,756 * U^3 + 0,16 * U^2 - 0,029 U + b))$$

avec $4,6 \leq a \leq 5,8$, et $-0,004 \leq b \leq 0,004$,
Usensor_min est la tension de capteur minimum qui est atteinte, lorsque le ventilateur radial fonctionne à soufflage libre sur sa caractéristique de ventilateur,
Usensor_max est la tension de capteur maximum qui est atteinte en cas de pression maximum de la caractéristique de ventilateur respective du ventilateur radial, et

$$U = ((Usensor) - (Usensor\_min)) / ((Usensor\_max) - (Usensor\_min)).$$

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 206352594 U
- US 1897858 A

- EP 1865205 A2